# EUROPEAN PATENT APPLICATION

(11) **EP 4 814 777 A1**
(43) Date of publication of application: **30.09.2026**
(21) Application number: 25305425.8
(22) Date of filing: 25.03.2025
(51) Int. Cl.: G06F 30/39, H05K 3/00, H05K 3/46, G06F 113/18, G06F 119/18

(54) **DESIGNING A RIGID-FLEX CIRCUIT BOARD**

(71) Applicant: Dassault Systèmes, 78140 Vélizy-Villacoublay (FR)
(72) Inventor: ROYER, Simon, VELIZY VILLACOUBLAY (FR)
(74) Representative: Bandpay & Greuter

(57) **Abstract**

The disclosure relates to a computer-implemented method for designing a rigid-flex circuit board comprising a set of rigid zones and one or more flexible zones. Each flexible zone connects a respective subset of rigid zones. The rigid-flex circuit board has a folded state and a flattened state. The method comprises obtaining a 3D layout of the set of rigid zones, representing the set of rigid zones in the folded state. The method comprises defining a respective set of edge segments of the respective subset of rigid zones connected by each flexible zone. The method comprises computing a 2D layout of the set of rigid zones, based on the 3D layout and on the respective set of edge segments, representing the set of rigid zones in the flattened state. The method comprises defining a respective plane portion representing each flexible zone in the flattened state, based on the 2D layout.

## Description

### TECHNICAL FIELD

The disclosure relates to the field of computer programs and systems, and more specifically to a method, system and program for designing a rigid-flex circuit board.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g., it relates to software solutions for analyzing and simulating the physical behavior of a future product. CAM is an acronym for Computer-Aided Manufacturing, e.g. it relates to software solutions for defining product manufacturing processes and resources.

In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Rigid-flex circuit boards are a type of printed circuit boards. Rigid-flex circuit boards combine technologies of traditional rigid printed circuit boards and of flexible boards. Rigid printed circuit boards are typically made from materials such as fiberglass-reinforced epoxy (FR4). In contrast, flexible boards are typically made from materials such as polyimide or transparent conductive polyester film on which silver or copper flexible circuits are printed.

The usage of rigid-flex circuit boards is growing in technical fields such as consumer electronics, aerospace engineering, and the medical area requiring miniaturization and high density of electronic components. The ability to design rigid-flex circuit boards to be manufactured and to be fit within specific devices (e.g., smartphones) provides engineers with innovative and compact electronic solutions.

Within this context, there is still a need for an improved solution for designing a rigid-flex circuit board.

### SUMMARY

It is therefore provided a computer-implemented method for designing a rigid-flex circuit board. The rigid-flex circuit board comprises a set of rigid zones and one or more flexible zones. Each flexible zone connects a respective subset of rigid zones. The rigid-flex circuit board has a folded state and a flattened state.

The method comprises obtaining a 3D layout of the set of rigid zones. The 3D layout represents the set of rigid zones of the rigid-flex circuit board in the folded state.

The method comprises defining, for each flexible zone, a respective set of edge segments of the respective subset of rigid zones connected by the flexible zone.

The method comprises computing a 2D layout of the set of rigid zones, based on the 3D layout and on the respective set of edge segments defined for each flexible zone. The 2D layout represents the set of rigid zones of the rigid-flex circuit board in the flattened state.

The method comprises defining, for each flexible zone, a respective plane portion representing the flexible zone in the flattened state, based on the 2D layout.

The method may comprise one or more of the following:
- surface-deforming the respective plane portion representing each flexible zone so as to obtain a 3D representation of the rigid-flex circuit board in the folded state;
- each flexible zone has in the folded state a curvature radius everywhere at least three times a thickness of the flexible zone;
- displaying the 3D representation;
- the computing of the 2D layout comprises:
   o selecting a reference rigid zone, the reference rigid zone being positioned on a reference plane, the 2D layout of the set of rigid zones being computed in the reference plane;
   ∘ iteratively positioning each second rigid zone on the reference plane, based on a relative position, in the 3D layout, between the second rigid zone and a first rigid zone previously positioned on the reference plane and to which the second rigid zone is connected by at least one flexible zone;
- the iteratively positioning is further based on a relative orientation, in the 3D layout, between a first edge segment of the respective set of edge segments defined on the first rigid zone and a second edge segment of the respective set of edge segments defined on the second rigid zone;
- the iteratively positioning further comprises:
   o translating the positioned second rigid zone on the reference plane along a direction so as to increase a distance between the positioned second rigid zone and the previously positioned first rigid zone on the reference plane, the distance measuring a length between a first point on a first edge segment of the respective set of edge segments of the previously positioned first rigid zone and a second point on a second edge segment of the respective set of edge segments of the positioned second rigid zone;
- the iteratively positioning further comprises:
   o computing at least one curve connecting a first point and a second point, the first point belonging to a first edge segment of the respective set of edge segments of the previously positioned first rigid zone on the reference plane, and the second point belonging to a second edge segment of the respective set of edge segments of the second rigid zone in the 3D layout, the first point and the second point being the closest points between the first edge segment of the first rigid zone and the second edge segment of the second rigid zone, the at least one computed curve being perpendicular to the first edge segment of the first rigid zone at the first point and perpendicular to the second edge element of the second rigid zone at the second point;
   ∘ transferring the at least one computed curve to the reference plane, the transferred at least one computed curve connecting the first point and a transferred second point on the reference plane; and
   ∘ positioning the second rigid zone on the reference plane, the positioning of the second rigid zone comprises preserving a perpendicular condition between the positioned second edge segment of the positioned second rigid zone and the transferred at least one computed curve at the transferred second point;
- the iteratively positioning further comprises:
   ∘ computing at least one line connecting a first point and a second point, the first point belonging to a first edge segment of the respective set of edge segments of the previously positioned first rigid zone, and the second point belonging to a second edge segment of the respective set of edge segments of the second rigid zone in the 3D layout, the first point and the second point being middle points of the respective edge segments; and
   ∘ positioning the second rigid zone on the reference plane, the positioning of the second rigid zone comprises performing a composition of rotations of the second rigid zone in the following order:
      - a first rotation around the first edge segment of the previously positioned first rigid zone so as to position the at least one computed connecting line on the reference plane;
      - a second rotation around the at least one computed connecting line, previously positioned on the reference plane, so as to position the second edge segment of the second rigid zone on the reference plane; and
      - a third rotation around the previously positioned second edge segment of the second rigid zone so as to position the second rigid zone on the reference plane; and
      optionally, translating the positioned second rigid zone on the reference plane along the at least one computed connecting line so as to increase a distance between the positioned second rigid zone and the previously positioned first rigid zone on the reference plane, the increase of the distance being a percentage of a length of the at least one connecting line previously positioned on the reference plane;
- the defining, for each flexible zone, of the respective plane portion representing the flexible zone in the flattened state comprises adding a rounded corner at the respective plane portion representing the flexible zone in the flattened state;
- the defining, for each flexible zone, of the respective plane portion representing the flexible zone in the flattened state comprises modifying a width of the respective plane portion; and/or
- the defining, for each flexible zone, of the respective plane portion representing the flexible zone in the flattened state comprises selecting a shape of the respective plane portion among at least one of the following:
   ∘ a rectangular shape, and/or
   ∘ a L shape, and/or
   ∘ a S shape, and/or
   ∘ a T shape, and/or,
   ∘ a serpentine shape, and/or
   optionally, a parametric shape being defined by a length parameter, a width parameter, and curvature parameters each representing a respective curvature of a bent-shaped flexible zone.

It is further provided a computer program comprising instructions which, when the program is executed by a computer, cause the computer to perform the method.

It is further provided a computer readable storage medium having recorded thereon the computer program.

It is further provided a system comprising a processor coupled to a memory, the memory having recorded thereon the computer program. The processor may further be coupled to a graphical user interface.

### BRIEF DESCRIPTION OF THE DRAWINGS

Non-limiting examples will now be described in reference to the accompanying drawings, where:
- FIG. 1 shows a flowchart of an example of the method;
- FIG. 2 shows an example of a graphical user interface of the system;
- FIG. 3 shows an example of the system; and
- FIG.s 4 to 22 illustrate the method.

### DETAILED DESCRIPTION

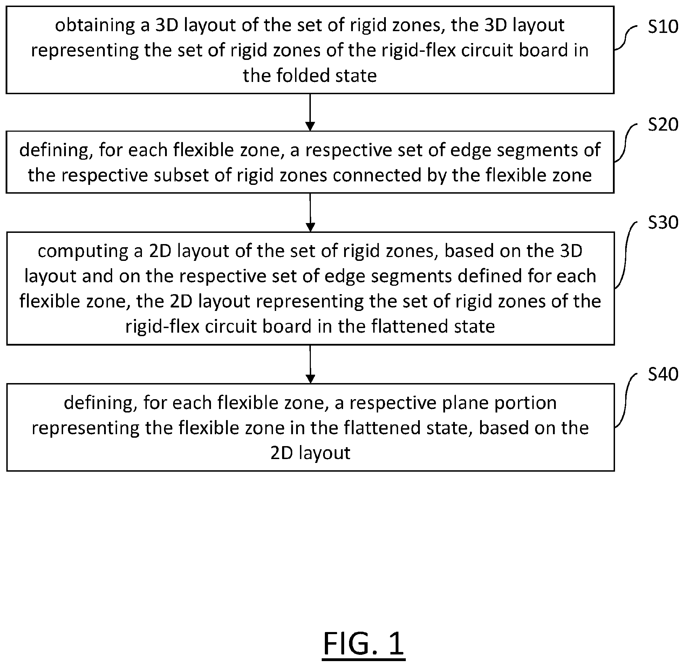

With reference to the flowchart of FIG. 1, it is proposed a computer-implemented method for designing a rigid-flex circuit board.

The rigid-flex circuit board comprises a set of rigid zones and one or more flexible zones. Each flexible zone connects a respective subset of rigid zones. The rigid-flex circuit board has a folded state and a flattened state.

The method comprises obtaining S10 a 3D layout of the set of rigid zones. The 3D layout represents the set of rigid zones of the rigid-flex circuit board in the folded state (i.e., the set of rigid zones as spatially arranged when the rigid-flex circuit board is in the folded state).

The method comprises defining S20, for each flexible zone, a respective set of edge segments of the respective subset of rigid zones connected by the flexible zone (i.e., the respective subset of rigid zones which is connected by the flexible zone).

The method comprises computing S30 a 2D layout of the set of rigid zones, based on the 3D layout obtained at S10 and on the respective set of edge segments defined at S20 for each flexible zone. The 2D layout represents the set of rigid zones of the rigid-flex circuit board in the flattened state (i.e., the set of rigid zones as spatially arranged when the rigid-flex circuit board is in the flattened state).

The method comprises defining S40, for each flexible zone, a respective plane portion representing the flexible zone in the flattened state, based on the 2D layout.

Such a method forms an improved solution for designing a rigid-flex circuit board.

Notably, the method amounts to a realistic and accurate design of a rigid-flex circuit board with the purpose of manufacturing the designed rigid-flex circuit board.

The method is adapted to the physical reality because it obtains a 3D layout (e.g., real-world 3D layout captured by a 3D scan technology) representing the set of rigid zones of the rigid-flex circuit board in the folded state. The 3D layout thus provides a physical configuration of the set of rigid zones of the rigid-flex circuit board in the folded state. The 3D layout may comprise positions and orientations (e.g., in a certain reference frame) of the set of rigid zones of the rigid-flex circuit board in the folded state. The 3D layout may be compliant with certain manufacturing requirements and/or product constraints (e.g., fitting the designed rigid-flex circuit board into a given volume). The method may then use such a 3D layout as a basis for the design and the subsequent manufacture of the rigid-flex circuit board.

The method is accurate because the solution provides, based on the 3D layout, a 2D layout representing the set of rigid zones of the rigid-flex circuit board in the flattened state. The flattened state is then exploited to design plane portions representing the flexible zones. In other words, the flattened state allows to arrange, based on the 3D layout, the one or more flexible zones, each connecting a respective subset of rigid zones. This way, the method achieves an accurate design of the rigid-flex circuit board, wherein rigid zones and flexible zones are assembled together according to certain manufacturing requirements and/or product constraints. In other words, the method is accurate because it leverages both the folded state and the flattened state to achieve a design of the rigid-flex circuit board compliant with certain manufacturing requirements and/or product constraints.

The method is ergonomic because the steps, or substantially all the steps of the method (e.g., the computing S30 and/or the defining S40), are executed by at least one computer, or any system alike. This way, a user (e.g., a designer, an engineer) of the method is significantly relieved from the intensive use of an haptic device and keyboard to perform the design of the rigid-flex circuit board. Moreover, the automation, or semi-automation of the method, makes the design process faster than any solution requiring several manual interventions during all the steps of the design process. This way, therefore, the method enhances efficiency, productivity and comfort of the user and streamlines the process of designing the rigid-flex circuit board.

The method, moreover, allows flexible zones to have a diversity of shapes, in contrast to solutions that allow an unique shape (e.g., rectangular shape in the flattened state or a cylindrical bends in the folded case). The defining S40 may thus, in examples, result into one or more non-rectangular plane portions (e.g., a L shape, a 5 shape, a T shape, or any other type of parametric shapes), each for a respective flexible zone. This further improves the realism and the accuracy of the designed rigid-flex circuit board and allows for a variety of solutions to meet specific needs (e.g., overlapping flexible zones in the rigid-flex circuit board, "book binders" configurations) compliant with manufacturing requirements and/or product constraints.

At least one (e.g., each) rigid zone of the set of rigid zones may be a planar rigid zone. At least one (e.g., each) rigid zone may comprise a respective base plane (e.g., a reference plane on which the rigid zone lies), a respective outline (e.g., to delineate a shape or a contour of the rigid zone, or any other internal structure thereof, if any), a respective thickness (e.g., based on a number of conductive layers and dielectric layers stacked up in the rigid zone), and one or more materials of composition of the rigid zone (e.g., fiberglass-reinforced epoxy (FR4) layers alternated to copper layers).

At least one (e.g., each) flexible zone of the one or more flexible zones may bend and twist. At least one (e.g., each) flexible zone may comprise a respective outline (e.g., to delineate a shape or a contour of the flexible zone, or any other internal structure thereof, if any), a respective thickness (e.g., based on a number of layers stacked up in the flexible zone) and one or more materials of composition of the flexible zone (e.g., polyimide or transparent conductive polyester films).

The obtaining S10 may comprise retrieving (e.g., from a database) or receiving (e.g., from a remote server) a 3D layout of the set of rigid zones based on a spatial configuration of previously placed rigid zones. The 3D layout obtained at S10 may comprise, for each rigid zone of the set of rigid zones, 3D spatial coordinates and orientations of the rigid zone in a certain reference frame (e.g., a standard Cartesian reference frame in 3D). In other words, the 3D layout may represent a spatial configuration (e.g., a 3D scene) of the set of rigid zones, e.g., compliant with certain manufacturing requirements and/or product constraints. The 3D layout may represent a spatial configuration of previously placed rigid zones of a specific electronic device (e.g., a camera, a smartphone), captured by a 3D scan technology.

Alternatively, the obtaining S10 may comprise creating (e.g., generating) a 3D layout of the set of rigid zones based on a spatial configuration using a user input (e.g., by drag-and-drop the set of rigid zones), by a graphical interface unit and/or an haptic device. In other words, the method allows the user (e.g., a designer, an engineer) to generate a 3D layout of the set of rigid zones by dragging-and-dropping the set of rigid zones so as the 3D layout is compliant with certain manufacturing requirements and/or product constraints. In this case, for each rigid zone, the user input may comprise defining a respective base plane, sketching a respective outline, setting a value of the respective thickness, and defining one or more materials of composition of the rigid zone. The 3D layout may represent a spatial configuration (e.g., a 3D scene) of the set of rigid zones, e.g., compliant with certain manufacturing requirements and/or product constraints.

Each edge segment may be a portion of the respective outline. The edge segment (e.g., a rigid edge segment) of a rigid zone may thus be a connecting edge segment between the rigid zone and a flexible zone.

The defining (e.g., the selecting) S20 of a respective set of edge segments may be based on the 3D layout and/or on a spatial proximity among the edge segments. The defining (e.g., the selecting) S20 of a respective set of edge segments may be performed by a dedicated algorithm for edge detection. The dedicated algorithm may be a neural network specifically adapted for edge detection (e.g., the neural network may be a convolutional neural network).

Alternatively, the defining (e.g., the selecting) S20 of a respective set of edge segments may comprise, by a graphical interface unit, selecting the respective set of edge segments with a user input. In this case, for each rigid zone of the respective subset of rigid zone, the user input may comprise selecting an edge segment of the rigid zone so as to define the respective set of edge segments.

The 2D layout computed at S30 may comprise, for each rigid zone of the set of rigid zones, 2D planar coordinates and orientations of the rigid zone in a certain reference plane (e.g., corresponding to a respective base plane of a first rigid zone, which is also referred to as anchor rigid zone). In other words, the 2D layout may represent a planar configuration (e.g., a 2D flattened representation of the 3D layout) of the set of rigid zones. The computed 2D layout may, thus, be a result of a flattening transformation of the set of rigid zones of the rigid-flex circuit board from the folded state to the flattened state. The 2D planar coordinates and orientations of each rigid zone of the set of rigid zones may be based on (e.g., be function of) the obtained 3D layout (e.g., the 3D spatial coordinates and orientations of each rigid zone of the set of rigid zones in the folded state) and on the respective set of edge segments defined for each flexible zone.

A plane portion representing a respective flexible zone in the flattened state may comprise at least one respective (e.g., connecting) edge segment in common with a rigid zone of the respective subset of rigid zones connected by the respective flexible zone.

The defining S40, for each flexible zone, of a respective plane portion may comprise defining the respective outline of the flexible zone (e.g., to delineate a shape or a contour of the flexible zone, or any other internal structure thereof, if any) based on certain criteria (e.g., minimizing the area of the flexible zone to reduce the cost of manufacturing, or optimizing the shape of the flexible zone to meet specific manufacturing requirements or product constraints). The respective outline of the flexible zone connecting at least two rigid elements may be represented by at least two curves (e.g., splines), each of the at least two curves connecting a point (e.g., an edge point or a boundary point) on a first edge segment of a first rigid zone (among the at least two rigid zones) with a point (e.g., an edge point or a boundary point) on a second edge segment of a second rigid zone (among the at least two rigid zones).

Optionally, the defining S40, for each flexible zone, of a respective plane portion may comprise refining the respective plane portion, e.g., by predefined manufacturing and optimization conditions and/or by means of a graphic unit interface from the user.

Further optional features of the method are now discussed.

The method may comprise surface-deforming the respective plane portion representing each flexible zone so as to obtain a 3D representation of the rigid-flex circuit board in the folded state.

The surface-deforming of the respective plane portion allows to compute a 3D representation of the respective plane portion. The surface-deforming may be performed by a dedicated algorithm (e.g., a triangulated surface mesh deformation) which takes as input the defined respective plane portion and provides as output the 3D representation of the defined respective plane portion (e.g., the respective plane portion being bent in the folded state). In examples, the surface-deforming may be performed by executing the "CGAL 4.6 - Triangulated Surface Mesh Deformation" algorithm, as described by the content found at the following URL at the priority date of the present application: http://www.cgal.org. Said content and algorithm are incorporated herein by reference. The surface-deforming may be (e.g., independently) performed for each respective plane portion. The surface-deforming of each plane portion may comprise moving a respective (e.g., connecting) edge segment (e.g., corresponding to an edge segment of a rigid zones connected by the flexible zone represented by the plane portion) from an initial position based on the 2D layout to match a final position based on the obtained 3D layout. In other words, the surface-deforming algorithm may deform (e.g., bend) each plane portion so as the respective (e.g., connecting) edge segment be positioned (i.e., matched) according to the respective set of edge segments of the rigid zones of the rigid-flex circuit board in the folded state. In yet other words, the surface-deforming algorithm may comprise moving the (e.g., connecting)edge segment from an initial position defined in the 2D layout to match a final position defined in the 3D layout.

The obtained 3D representation may represent a folded-back representation, wherein the set of rigid zones are positioned as defined in the 3D layout and the one or more flexible zones correspond to the result of applying the surface-deforming algorithm to the respective plane portions.

The obtained 3D representation of the rigid-flex circuit board in the folded state ensures a realistic and accurate design of the rigid-flex circuit board before being manufactured. Moreover, the obtained 3D representation enables the integration of the designed rigid-flex circuit board into (a volume of) a device of interest (e.g., a camera, a smartphone). This way, the obtained 3D representation may be used, e.g., to run clearance checks, clash analysis, manufacturability/mounting validation, technical drawings for documentation. The obtained 3D representation may be used as a support to compute the detailed geometry of the copper traces running across the flexible zones, e.g., for all types of electronic simulations such as electromagnetic analysis, circuit simulation, or structural simulation.

The method may result in that, by surface-deforming the respective plane portion, each flexible zone has, in the folded state, a curvature radius everywhere at least three times a thickness of the flexible zone. In other words, in the result of the surface-deforming of the respective plane portion, each flexible zone in the resulted 3D representation of the rigid-flex circuit board in the folded state may have a respective radius of curvature everywhere at least three times a thickness of the flexible zone. This way, i.e., by imposing this type of structural constraint on the surface-deformation, the obtained 3D representation of the rigid-flex circuit board in the folded state is compliant with certain manufacturing criteria and/or product constraints, e.g., to ensure reliability, guarantee longevity of the manufactured product, and prevent damage by minimizing the mechanical stress on the materials of the flexible parts.

The method may further comprise displaying the 3D representation of the rigid-flex circuit board in the folded state. The displaying may comprise showing the obtained 3D representation on a screen (e.g., a touch screen) so as to visualize the 3D representation to a user and/or validate the 3D representation before the manufacturing of the designed rigid-flex circuit board.

The computing S30 of the 2D layout may comprise selecting a reference rigid zone (also referred to as anchor rigid zone). The reference rigid zone may be positioned on a reference plane, where the 2D layout of the set of rigid zones may be computed. In other words, the reference plane may correspond to a base plane of the reference rigid zone. The 2D layout may be defined and computed on such a reference plane.

The computing S30 of the 2D layout may comprise iteratively positioning each second rigid zone on the reference plane. The iteratively positioning of each second rigid zone may be based on a relative position, in the 3D layout, between the second rigid zone and a first rigid zone previously positioned (e.g., starting from the reference rigid zone previously selected) on the reference plane and to which the second rigid zone is connected by at least one flexible zone. The iteratively positioning may be further based on a relative orientation, in the 3D layout, between a first edge segment of the respective set of edge segments defined on the first rigid zone and a second edge segment of the respective set of edge segments defined on the second rigid zone.

In other words, the iteratively positioning may comprise a first iterative step by selecting a reference rigid zone in the 3D layout. The iteratively positioning may comprise, for each rigid zone, starting from the reference rigid zone (i.e., the anchor rigid zone) and proceeding (e.g., one by one) to a next rigid zone (e.g., a second rigid zone), whose defined edge segment is to be connected by at least one flexible zone to the edge segment of the previously positioned rigid zone. The iteratively positioning may comprise computing, for each rigid zone in the 3D layout, 2D planar coordinates and orientations of the rigid zone on the reference plane. The 2D coordinates and orientation of each rigid zone may be based on (e.g., be function of) a relative position, in the 3D layout, between the second rigid zone (e.g., next rigid zone) and a first rigid zone which has been previously positioned on the reference plane and to which the second rigid zone (e.g., next rigid zone) is to be connected by at least one flexible zone. The 2D coordinates and orientation of each rigid zone may further be based on (e.g., be function of) a relative orientation, in the 3D layout, between a first edge segment of the respective set of edge segments defined on the first rigid zone and a second edge segment of the respective set of edge segments defined on the second rigid zone (e.g., next rigid zone). This way, the 2D layout amounts to a flattened representation of the 3D layout, meaning that the 2D layout depends on the relative positions and relative orientations, defined in the 3D layout, between each pair of rigid zones. The iteratively positioning may end when all rigid zones of the set of rigid zones are positioned on the reference plane. The 2D layout is thus the result of such a iteratively positioning of the set of rigid zones.

The iteratively positioning may further comprise translating the positioned second rigid zone on the reference plane along a direction so as to increase a distance between the positioned second rigid zone and the previously positioned first rigid zone on the reference plane. The translating (e.g., in one specific direction on the reference plane) helps achieving certain manufacturing requirements and/or product constraints, e.g., to guarantee that the plane portion representing the flexible zone connecting the positioned first rigid zone and the positioned second rigid zone is compliant with the product to be manufactured. The distance may measure a length between a first point on a first edge segment of the respective set of edge segments of the previously positioned first rigid zone and a second point on a second edge segment of the respective set of edge segments of the positioned second rigid zone. The translating may be along a line (e.g., a straight line) connecting the first point to the second point.

The iteratively positioning may further comprise computing at least one curve (e.g., a spline of a given degree, the degree being between 3 and 7, e.g., the degree being 5) connecting a first point and a second point. The first point may belong to a first edge segment of the respective set of edge segments of the previously positioned first rigid zone on the reference plane. The second point may belong to a second edge segment of the respective set of edge segments of the second rigid zone in the 3D layout. The first point and the second point may be the closest points between the first edge segment of the first rigid zone and the second edge segment of the second rigid zone. The at least one computed curve may be perpendicular to the first edge of the first rigid zone at the first point and perpendicular to the second edge element of the second rigid zone at the second point. The at least one computed curve may be perpendicular to the normal of the plane of the first rigid zone at the first point and perpendicular to the normal of the plane of the second rigid zone at the second point.

The iteratively positioning may further comprise transferring the at least one computed curve to the reference plane. The transferred at least one computed curve may connect the first point and a transferred second point on the reference plane. The transferring may be performed by a transfer function which may be configured to transfer each point of the at least one computed curve to a respective point on the reference plane, possibly the transfer function comprising one or more constraints.

The transferring of the at least one computed curve to the reference plane may comprise generating an extruded surface (e.g., a ruled surface) as a result of extruding (e.g., sweeping) the at least one computed curve along the direction of the first edge segment of the respective set of edge segments of the previously positioned first rigid zone on the reference plane. The generated extruded surface may be transferred to the reference plane by means of the transfer function. The at least one computed curve may thus be also transferred to the reference plane, as the transferred generated extruded surface may comprise the transferred at least one computed curve.

The iteratively positioning may further comprise positioning the second rigid zone on the reference plane. The positioning of the second rigid zone may comprise preserving a perpendicular condition between the positioned second edge segment of the positioned second rigid zone and the transferred at least one computed curve at the transferred second point. In other words, the positioning of the second rigid zone on the reference plane may preserve the perpendicular condition, previously defined in the computing of the at least one curve, to the second edge element of the second rigid zone at the second point. In yet other words, said perpendicular condition may be a constraint of the iteratively positioning.

Alternatively, the iteratively positioning may further comprise computing at least one line (e.g., a straight line) connecting a first point and a second point. The first point may belong to a first edge segment of the respective set of edge segments of the previously positioned first rigid zone on the reference plane. The second point may belong to a second edge segment of the respective set of edge segments of the second rigid zone in the 3D layout. The first point and the second point may be middle points of the respective edge segments.

In this alternative, the iteratively positioning may further comprise positioning the second rigid zone on the reference plane. The positioning of the second rigid zone may comprise performing a composition of rotations of (e.g., applied to) the second rigid zone in the following order. A first rotation around the first edge segment of the previously positioned first rigid zone so as to position the at least one computed connecting line on the reference plane. A second rotation around the at least one computed connecting line, previously positioned on the reference plane, so as to position the second edge segment of the second rigid zone on the reference plane. A third rotation around the previously positioned second edge segment of the second rigid zone so as to position the second rigid zone on the reference plane.

Still in this alternative, the iteratively positioning may further comprise translating the positioned second rigid zone on the reference plane along the at least one computed connecting line so as to increase a distance between the positioned second rigid zone and the previously positioned first rigid zone on the reference plane. The increase of the distance may be a percentage (e.g., between 5% and 15%) of a length of the at least one connecting line previously positioned on the reference plane.

The defining S40, for each flexible zone, of the respective plane portion representing the flexible zone in the flattened state may comprise (e.g., automatically by the method or manually by a user from a pop-up windows on the graphical interface unit) selecting a shape of the respective plane portion among at least one of the following catalogue: (i) a rectangular shape, and/or (ii) a L shape, and/or (iii) a S shape, and/or (iv) a T shape, and/or (v) a serpentine shape. Optionally, the defining S40 may comprise (e.g., automatically) selecting a parametric shape. The parametric shape may be defined by a length parameter, a width parameter, and curvature parameters each representing a respective curvature of a bent-shaped flexible zone. The method may comprise outputting the one or more selected shapes from the catalogue. Data of the catalogue may be stored on a database.

The defining S40, for each flexible zone, of the respective plane portion representing the flexible zone in the flattened state may comprise modifying a width (e.g., a constant width) of the respective plane portion. In other words, the modifying a width of the respective plane portion may correspond to modifying a respective outline (e.g., the outline comprising one or more curves defining the shape of the plane portion) of the flexible zone connecting at least two rigid elements. This way, the method allows to design accurate rigid-flex circuit boards, wherein a same edge segment of a rigid zone is connected to one or more edge segments of rigid zones, each by a respective flexible zone. In other words, the method may comprise varying (e.g., modifying) the width of the respective plane portion so as to connect a same edge segment of a rigid zone to one or more edge segments of rigid zones. The sum of the widths of each respective plane portions may be equal or less to the length of the same edge segment of the rigid zone.

The defining S40, for each flexible zone, of a respective plane portion representing the flexible zone in the flattened state may comprise adding a rounded corner at the respective plane portion representing the flexible zone in the flattened state. Rounded corners enhance durability and reliability of the designed rigid-flex circuit board. Indeed, the rounded corners allow the flexible zones to bend and flex more smoothly without causing tears or delamination. Moreover, rounded corners help distributing the mechanical stress more evenly, thus reducing the likelihood of damage. Furthermore, rounded corners are less prone to defects during the production or manufacturing process.

"Designing a rigid-flex circuit board" designates any action or series of actions which is at least a part of a process of elaborating a modeled object (in 3D and/or in 2D) representing a rigid-flex circuit board. The method of the present disclosure may form such a process or may form at least a part of such a process.

The design of the rigid-flex circuit board may comprise at least two main sub-processes: a first sub-process involving a mechanical CAD (mCAD) design and a second sub-process involving an electrical CAD (eCAD) design.

The first sub-process (i.e., the mCAD design) may include designing the overall circuit board shape (e.g., outlines of the rigid zones, outlines of the flexible zone, respective values of thickness, position of mounting holes, and any other component of the geometry of the rigid-flex circuit board). The design in mCAD may comprise integrating the rigid-flex circuit board in an electronic device (e.g., a smartphone, a camera, a medical device such as a pacemaker). The size and shape of the rigid zones as well as flexible zones ensure the quality and the manufacturing of the electronic device. The mCAD design may generate data stored in files to be sent to a manufacturing device for a manufacturing process. The most common standards to manufacture circuit boards are STL, DWG and DXF.

The defining S10 may comprise: (i) placing rigid zones to avoid mechanical stress and damage of the rigid-flex circuit board in the folded state, (ii) defining geometric properties (e.g., outlines, values of the thickness) of the rigid zones and of the flexible zones to facilitate assembly and mounting of the rigid-flex circuit board, (iii) selecting appropriate materials for both rigid zone (e.g., FR4) and flexible zones (e.g., polyimide) according to the specific scope of the circuit board and/or for optimizing the cost of manufacturing/production, (iv) defining the number of layers to stack up for each rigid zone and each flexible zone, (v) placing thermal vias and hear sinks to dissipate heat effectively, and (vi) rounding corners to reduce damage to the flexible zones. The result of the mCAD design may meet all, or substantially all, of the above-mentioned requirements to ensure reliability and manufacturability of the rigid-flex circuit board based on the result of the mCAD design. Steps S10-S40 of the method may comprise mCAD designing.

For the sake of an example, when the flexible zones are too large (e.g., the width of the respective plane portion is too wide) or too long (e.g., the distance of the respective plane portion between the rigid zones in the 2D layout is too large), they may collide with other internal components of the electronic device, thus lowering its life expectancy. Moreover, the longer the flexible zone, the more expensive is the manufacturing/production process. On the contrary, if the flexible zones are too small, it makes more difficult or even impossible to integrate the rigid-flex circuit board into the electrical device and, thus, to manufacture it.

The second sub-process (i.e., the eCAD design) may include designing the electrical circuit (e.g., layers stacked up, conductive traces, vias, and any other component of the electrical circuit) based on the result of the mCAD design. The design in eCAD may be done in a multi-layer 2D design tool. The circuit board is designed flat, i.e., the eCAD tool may take as input the result of the method of the present disclosure, notably the 2D layout computed at S30 and S40. The overall shape of the circuit board and the shape of the rigid and flexible zones are imported from the mCAD design tool as 2D layout. The eCAD design may generate data stored in files to be sent to a manufacturing device for a manufacturing process. The most common standards to manufacture circuit boards are IPC-2581 or the format ODB++.

The most common standards to exchange data between the mCAD and eCAD tools are IDF (Intermediate Data Format) and IDX (Intermediate Data Exchange). Data is exchange back and forth between eCAD and mCAD all along the design process. These formats help exchanging data between electrical and mechanical designs, ensuring seamless collaboration and accurate product development of the designed rigid-flex circuit board. The computing S30 of a 2D layout and the defining S40 may output data stored in the standards of an IDF format and/or an IDX format. In other words, the method may thus, in examples, be performed according to such exchange data standards.

The method may comprise using the output (i.e., the output data representing the 2D layout computed at S30 and, for each flexible zone, the respective plane portion defined at S40), to manufacture a rigid-flex circuit board represented by the output data of the method. The using may comprise performing the manufacturing of the designed rigid-flex circuit board. This means that the manufactured rigid-flex circuit board may comprise a set of rigid zones and one or more flexible zones in accordance with the output of the method. In other words, the set of rigid zones and the one or more flexible zones of the manufactured rigid-flex circuit board may all, or in part, match the exact outline of the output of the method, optionally after user editions or without user editions.

The manufacturing (e.g., by stereolithographic technology or stereolithographic technology) of the designed rigid-flex circuit board may comprise: (i) fabricating the set of rigid zones and the set of flexible zones according to the mCAD design, the fabricating comprising obtaining a first layer (e.g., a first layer of polyimide with a respective thickness of between 25 and 50 micrometers) being in common with both at least one rigid zone and at least one flexible zone of the rigid-flex circuit board, (e.g., alternately) stacking layers of copper (e.g., with a respective thickness between 18 and 35 micrometers) and layers of FR4 around the first layer for the at least one rigid zone and (e.g., alternately) stacking layers of copper (e.g., with a respective thickness between 18 and 35 micrometers) and layers of PET (e.g., with a respective thickness between 25 and 50 micrometers) coated with a thermosetting adhesive layer around the first layer for the at least one flexible zone, (ii) etching the copper to create circuits according to the eCAD design, (iii) soldering the copper traces, (iv) assembling the rigid-flex circuit board's electronic components by using either surface mount technology (SMT) or through-hole technology, and (v) testing mechanical and electrical performances to be compliant with the requirements designed in the mCAD and eCAD design, respectively.

The method of the present disclosure, thus, generally manipulates modeled objects, such as CAD model designed/outputted by the method. A modeled object is any object defined by data stored, e.g., in the database. By extension, the expression "modeled object" designates the data itself. According to the type of the system, the modeled objects may be defined by different kinds of data. The system may indeed be any combination of a CAD system (e.g., a combination of mCAD and eCAD systems as described earlier), a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (e.g., a CAD system or a CAD software), it is additionally meant any system, software or hardware, adapted at least for designing a modeled object on the basis of a graphical representation of the modeled object and/or on a structured representation thereof (e.g., a 3D layout), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts. The specifications (also referred to as "CAD specifications") of a CAD model may be stored in a CAD file as explained above, but may also be stored as distributed CAD data on one or more storage, i.e. on a cloud environment.

In the context of CAD, a modeled object may typically be a 2D modeled object (e.g., the computed 2D layout at S30 representing the set of rigid zones of the rigid-flex circuit board in the flattened state and the one or more plane portions defined at S40) or 3D modeled object (e.g., the 3D layout representing the set of rigid zones of the rigid-flex circuit board in the folded state or the 3D representation of the rigid-flex circuit board in the folded state), e.g., representing a product such as a part or an assembly of parts, or possibly an assembly of products. The 2D or 3D modeled object may be a manufacturing product, i.e., a product to be manufactured. The manufacturing product may comprise the designed rigid-flex circuit board or a part thereof, e.g., the one or more flexible zones. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display (e.g., a touch screen) of a 3D representation facilitates design (i.e., increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with, for instance, a CAD/CAE software solution or CAD/CAE system, such as a (e.g., mechanical or electrical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any electro-mechanical or electronic part (including, e.g., consumer electronics, security and/or control and/or instrumentation products, computing and communication equipment, semiconductors, medical devices and equipment).

A CAD system may be history-based. In this case, a modeled object is further defined by data comprising a history of geometrical features. A modeled object may indeed be designed by a physical person (i.e., the designer/user) using standard modeling features (e.g., extrude, revolute, cut, and/or round) and/or standard surfacing features (e.g., sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, SolidWorks or trademark DELMIA^{®}.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:
- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

The modeled object outputted and/or designed by the method may be a 2D or 3D discrete geometrical representation of a manufacturing product. The discrete geometrical representation is a data structure, which comprises a discrete set of pieces of data. Each piece of data may specify an element of the product, and be referred to as a discrete element. The discrete geometrical representation may be 3D or, alternatively, 2D. Yet, alternatively, the discrete geometrical representation may be both 3D and 2D, i.e., may comprise a 3D portion which is a 3D discrete geometrical representation and a 2D portion which is a discrete geometrical representation, such as a hybrid 3D-2D meshing (e.g., for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the product, such as a solid 3D finite element model (FEM) or a 3D volume mesh (e.g., a 3D tetrahedral mesh). In such a case, each piece of data may represent a respective geometrical entity positioned in a 3D space such that the pieces of data form a solid representation of the part/product (i.e., "solid 3D discrete geometrical representation"). Each geometrical entity may represent a respective location (i.e., a material point) of the 3D object (in other words, a respective portion of material constitutive of a solid represented by the 3D object). The aggregation (i.e., union or juxtaposition) of the geometrical entities represents altogether the 3D object as a solid/volume. The 3D discrete geometrical representation may alternatively be a skin 3D discrete geometrical representation, representing a skin of the product, such as a 3D surface mesh (e.g., a triangular surface mesh) or a tessellation. In such a case, each piece of data may represent a respective geometrical entity positioned in a 3D space, such that the pieces of data form a representation of the product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

In the case of a 2D discrete geometrical representation, each piece of data may represent a respective geometrical entity positioned in a 2D space. The 2D discrete geometrical representation may be a 2D finite element mesh or any 2D mesh. The discrete geometrical representation may be associated with one or more thickness value(s), for example a distribution of thickness value over its finite elements. Such a 2D discrete geometrical representation may for example represent a generally planar product, such as a stamping part (e.g., with a constant thickness value) or a composite material part (e.g., with different thickness values).

The discrete geometrical representation may be or may be converted to a CAE model, also referred to as "finite element model (FEM)". The CAE model may stem from a CAD model representing the product, e.g., the method comprises at an initial stage obtaining the CAE model from the CAD model, for example using a meshing (e.g. triangulation) process. Conversely, a CAE model may be converted into a CAD model. The method may design/output a CAE model which may be then converted into a corresponding CAD model. The method may comprise, or may be included in a wider process that comprises, or may form a solution to, (e.g., automatically) converting the CAE model designed/outputted by the method into a CAD model, by using any known (e.g., automatic) CAE to CAD conversion process that converts a CAE model into a CAD model.

The modeled object outputted/designed by the method may alternatively be a CAD model, for example comprising or consisting in a feature tree and/or a B-rep. Such a model may stem from a CAE model and may results from a CAE to CAD conversion process, that the method may for example comprise at an initial stage.

The CAD model may be feature-based (e.g., it may comprise a feature tree, and optionally a corresponding B-rep obtained by executing the feature tree). A feature-based 3D model allows (e.g., during the determination of a manufacturing file or CAM file or CAM specifications stored as distribute data as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (e.g., during the determination of a manufacturing file or CAM file or CAM specification stored as distributed data as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but not limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduces memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g., footprint), in addition to transforming the CAE model into a more easily editable CAD model.

The generation of a custom computer program from CAD files or distributed CAD specifications may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The method may be included in a production process, which may comprise, after performing the method, producing a physical product corresponding to the modeled object designed/processed/outputted by the method (e.g., the designed rigid-flex circuit board). The production process may comprise the following steps:
- (e.g., automatically) applying the method, thereby obtaining the CAD model or CAE model outputted by the method;
- optionally, (e.g., automatically) converting the obtained CAE model into a CAD model as previously discussed, using a (e.g., automatic) CAE to CAD conversion process;
- using the obtained CAD model for manufacturing the product.

Converting the CAE model into a CAD model may comprise executing the following (e.g., fully automatic) conversion process that takes as input a CAE and converts it into a CAD model comprising a feature-tree representing the product. The conversion process includes the following steps (where known fully automatic algorithms exist to implement each of these steps):
- segmenting the CAE model, or an outer surface/skin thereof, thereby obtaining a segmentation of the CAE model into segments, e.g., each forming a surface portion of the model;
- detecting geometries of CAD features by processing the segments, e.g., including detecting segments or groups of segments each forming a given CAD feature geometry (e.g., an extrusion, a revolution, or any canonic primitive), and optionally geometric characteristics thereof (e.g., extrusion axis, revolution axis, or profiles);
- parameterizing the detected geometries, e.g., based on the geometries and/or on said geometric characteristics thereof;
- fitting CAD operators each to a respective portion of the CAE model, based on a geometry of said portion, for example by aggregating neighboring segments detected as being part of a same feature geometry;
- encoding the geometries and the corresponding CAD operators into a feature tree;
- optionally, executing the feature tree, thereby obtaining a B-rep representation of the product;
- outputting the feature tree and optionally the B-rep, the feature tree and optionally the B-rep forming the CAD model.

Using a CAD model for manufacturing designates any real-world action or series of action that is/are involved in/participate to the manufacturing of the product represented by the CAD model. Using the CAD model for manufacturing may for example comprise one or more of the following steps:
- editing the obtained CAD model;
- performing simulation(s) based on the CAD model or on a corresponding CAE model (e.g., the CAE model from which the CAD model stems, after a CAE to CAD conversion process), such as simulations for validation of mechanical, use and/or manufacturing properties and/or constraints (e.g., structural simulations, electromagnetic simulations, thermodynamics simulation, aerodynamic simulations);
- editing the CAD model based on the results of the simulation(s);
- optionally (i.e., depending on the manufacturing process used, the production of the product may or may not comprise this step), (e.g., automatically) determining manufacturing specifications/CAM specifications (e.g., stored as a manufacturing file/CAM file or as distributed CAM data stored on one or more storage (e.g., the specifications comprising manufacturing instructions for manufacturing the product represented by the CAD model and/or control instructions for the manufacturing process and/or for commanding the manufacturing process or manufacturing tool(s) thereof)) based on the (e.g., edited) CAD model (e.g., the control instructions stem from the CAD file or distributed CAD data storing the CAD model and/or specifications of the CAD model), for production/manufacturing of the manufacturing product;
- sending the CAD specifications and/or the manufacturing specifications/CAM specifications to a factory in view of manufacturing the product represented by the CAD model; and/or
- (e.g., automatically) producing/manufacturing, based on the determined manufacturing specifications/CAM specifications or on the CAD model, the mechanical product originally represented by the model outputted by the method. This may include feeding (e.g., automatically) the manufacturing specifications/CAM specifications and/or the CAD specifications to the machine(s) performing the manufacturing process.

This last step of production/manufacturing may be referred to as the manufacturing step or production step. This step manufactures/fabricates the product based on the CAD model and/or the CAM specifications, e.g., upon the CAD model and/or CAD specifications being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g., laser cutting or plasma cutting steps), one or more stamping steps, one or more forging steps, one or more bending steps, one or more deep drawing steps, one or more molding steps, one or more machining steps (e.g., milling steps) and/or one or more punching steps. Because the design method improves the design of a model (CAE or CAD) representing the part/product, the manufacturing and its productivity are also improved.

Editing the CAD model may comprise, by a user (i.e., a designer), performing one or more editions of the CAD model, e.g., by using a CAD solution. The modifications of the CAD model may include one or more modifications each of a geometry and/or of a parameter of the CAD model. The modifications may include any modification or series of modifications performed on a feature tree of the model (e.g., modification of feature parameters and/or specifications) and/or modifications performed on a displayed representation of the CAD model (e.g., a B-rep). The modifications are modifications which maintain the technical functionalities of the product, i.e., the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may, additionally or alternatively, include any modification or series of modifications that make the CAD model technically compliant with a further use of the product once manufactured, such modification or series of modifications being for example based on results of the simulation(s).

The CAM specifications may comprise a manufacturing set up model obtained from the CAD model. The manufacturing set up may comprise all data required for manufacturing the product (e.g., control instructions for controlling the manufacturing process) so that it has a geometry and/or a distribution of material that corresponds to what is captured by the CAD model, possibly up to manufacturing tolerance errors. Determining the production specifications may comprise applying any CAM (Computer-Aided Manufacturing) or CAD-to-CAM solution for (e.g., automatically) determining production specifications from the CAD model (e.g., any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:
- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product may be an additive manufacturable part, i.e., a part to be manufactured by additive manufacturing (i.e., 3D printing). The additive manufacturable part may comprise a part of the designed rigid-flex circuit board, e.g., the one or more flexible zones. In this case, the production process does not comprise the step of determining the CAM specifications and directly proceeds to the producing/manufacturing step, by directly (e.g., and automatically) feeding a 3D printer with the CAD model. 3D printers are configured for, upon being fed with a CAD model representing a product (e.g., and upon launching, by a 3D printer operator, the 3D printing), directly and automatically 3D print the product in accordance with the CAD model. In other words, the 3D printer receive the CAD model, which is (e.g., automatically) fed to it, reads (e.g., automatically) the CAD model, and prints (e.g., automatically) the part by adding together material, e.g., layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, e.g. by a user (e.g., an operator of the 3D printer) or automatically (by the 3D printer or a computer system controlling it), determining such manufacturing corrections and/or tolerance errors, for example by modifying the CAD specifications to match specifications of the 3D printer. The production process may additionally or alternatively comprise determining (e.g. automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product may alternatively be a stamped part, also possibly referred to as "stamping part", i.e., a part to be manufactured in a stamping process. The stamped part may comprise may comprise a part of the designed rigid-flex circuit board, e.g., the one or more flexible zones. The production process may in this case comprise (e.g. automatically) determining a CAM specifications based on the CAD model. The CAD model represents the stamping part, e.g., possible with one or more flanges if the part is to comprise some, and possibly in this latter case with extra material to be removed so as to form an unfolded state of one or more flanges of the part, as known per se from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM specifications may in this stamping case comprise (e.g., automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM specifications may also comprise determining a corresponding machining CAM specifications, e.g., as discussed previously. If there are one or more flanges, determining the CAM specifications may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM specifications thereby determined may thus comprise: parameters of the stamping tool, optionally said specifications for folding the flanges (if any), and optionally a machining production specifications for removing the extra material (if any).

The stamping production process may then output, e.g., directly and automatically, the CAM specifications, and perform the stamping process (e.g., automatically) based on the specifications. The stamping process may comprise stamping (e.g., punching) a portion of material to form the product as represented by the CAD specifications, that is possibly with the unfolded flanges and the extra material (if any). Where appropriate, the stamping process may then comprise cutting the extra material based on the machining production specifications and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

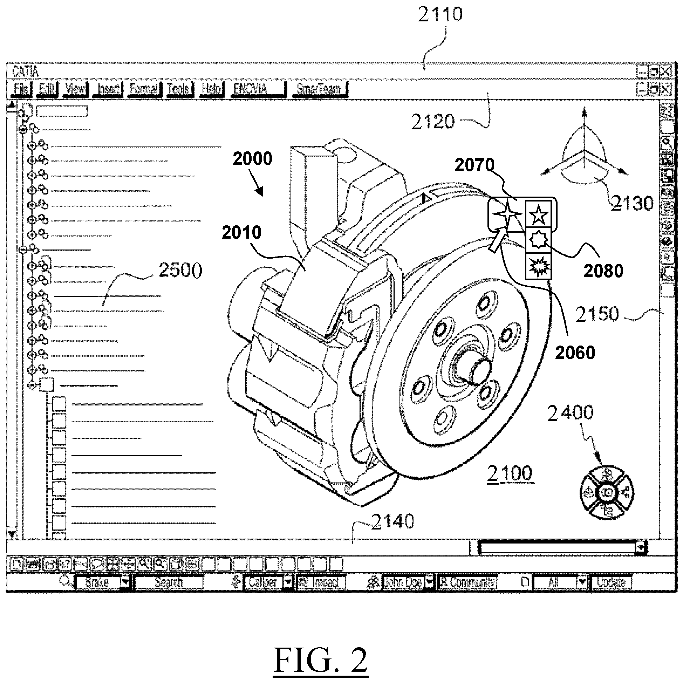

FIG. 2 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

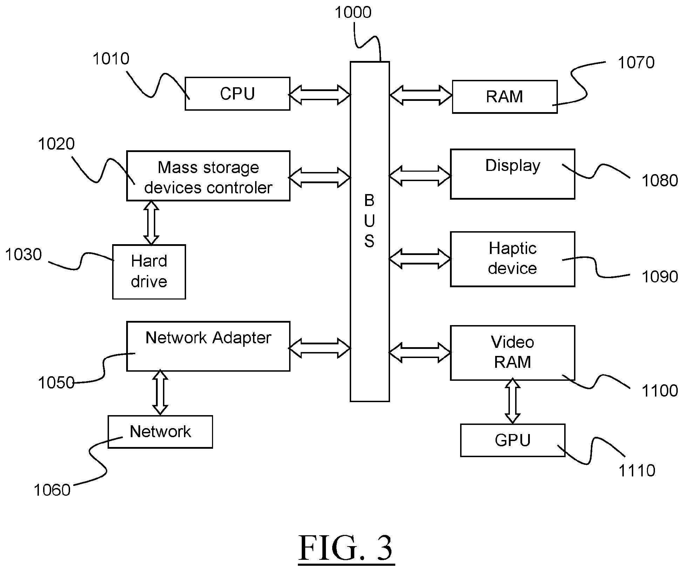

FIG. 3 shows an example of the system, wherein the system is a client computer system, e.g., a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

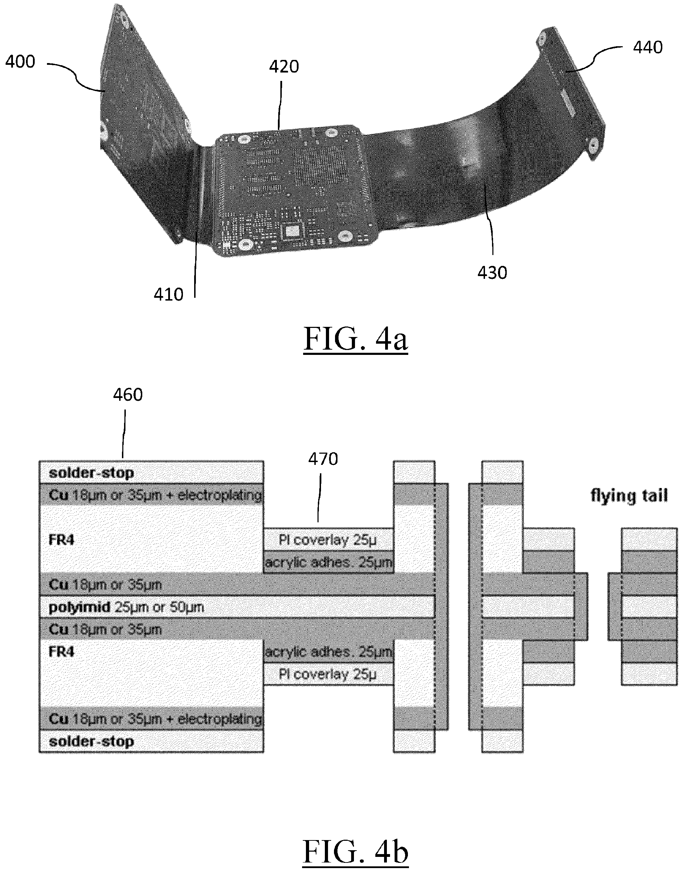

FIG. 4a shows, for illustrative purposes, an example of a rigid-flex circuit board that may be designed and manufactured with the method. A rigid circuit board comprises a set of rigid zones (e.g., 400, 420 and 440) and one or more flexible zones (e.g., 410 and 430). Each flexible zone connects a respective subset of rigid zones (e.g., the flexible zone 410 connects the rigid zone 400 and the rigid zone 420).

FIG. 4b shows, for illustrative purposes, an example of a layers configuration (also referred to as stack up layers) of a rigid-flex circuit board that may be designed and manufactured with the method. The figure shows a section of the layers configuration and displays the respective material and thickness of each layer. The rigid zone 460 comprises an alternance of conductive layers and dielectric layers, soldered together. The conductive layers correspond to the copper (Cu) electroplating layers having a respective thickness between 18µm and 35µm. The dielectric layers correspond to the fiberglass-reinforced epoxy (FR4) layers. In the middle of the layer configuration of the rigid zone 460, between two copper layers, there is a layer of polyimide, whose thickness ranges from 25µm to 50µm. The polyimide is a material that is resistant to physical stress. For this reason, the flexible zone 470 comprises a core of polyimide, shared with the rigid zone 460, cladded by an acrylic adhesive of 25µm thickness and covered by another layer of polyimide and/or PET of 25µm thickness. Step S10 of the present disclosure may comprise designing a layers configuration.

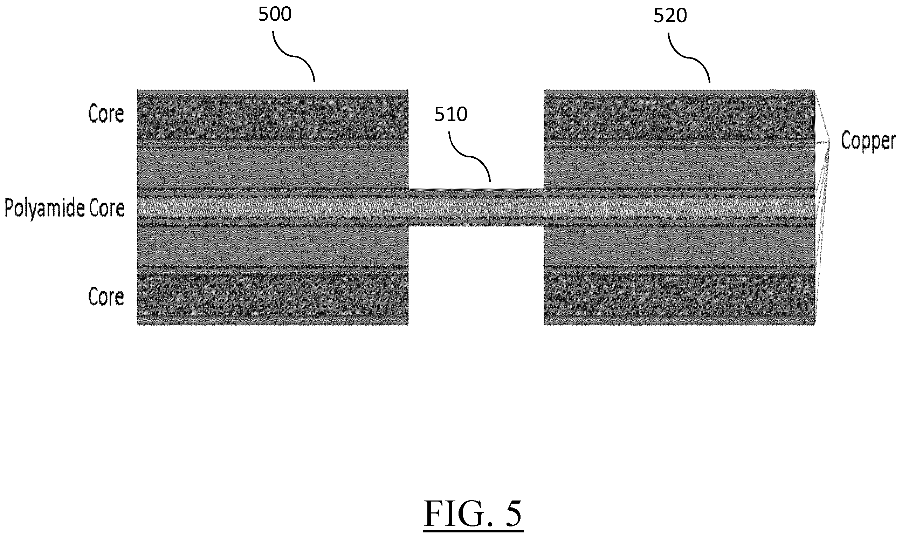

FIG. 5 shows a schematic example of a layer configuration for a rigid-flex circuit board comprising a first rigid zone 500 connected by a flexible zone 510 to a second rigid zone 520 and that may be designed and manufactured with the method. The first rigid zone and the second rigid zone comprise, respectively, a polyimide core that is in common with the flexible zone. Each rigid zone and each flexible zone have a respective layers configuration. For each layer, a difference of an upper bound and lower bound may define the respective value of the thickness.

Example implementations of the method of the present disclosure are now described.

A designer of a rigid-flex circuit board wants to design (e.g., by using an mCAD tool) a rigid-flex circuit board to be fit into products where available space is tight, such as high-tech products (smartphone, camera, pacemaker) or products where rigid-flex circuit boards enhance the product reliability (such as electronic components in satellites).

During S10 (e.g., during the mCAD design process) of the method, electronic key components of product, such as connectors, sensors, antennas, may be critically positioned according to certain mechanical and/or geometrical requirements. A preliminary step of the method may be to define the position of the rigid zones based on the location of critically positioned electronic key components, and based on the estimated area or volume available inside the product.

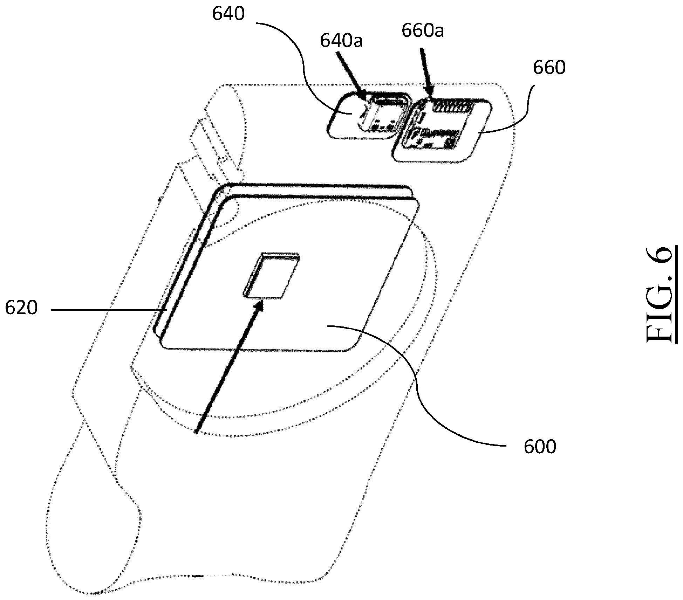

FIG. 6 illustrates, for the sake of a visual example, a silhouette representing the case of a camera. The USB connector 640a and the SD card reader/connector 660a are placed on a side of the case, whereas the camera image sensor is placed on the center of the case. In other words, the positions of electronically key components of the product may depend on specific mechanical and/or geometrical requirements. The figure shows four rigid zones. A first rigid zone 600 and a second rigid zone 620 that support the camera image sensor, a third rigid zone 640 that supports the USB connector and a fourth rigid zone 660 that supports the SD card reader. The four rigid zones define a set of rigid zones positioned in a 3D layout.

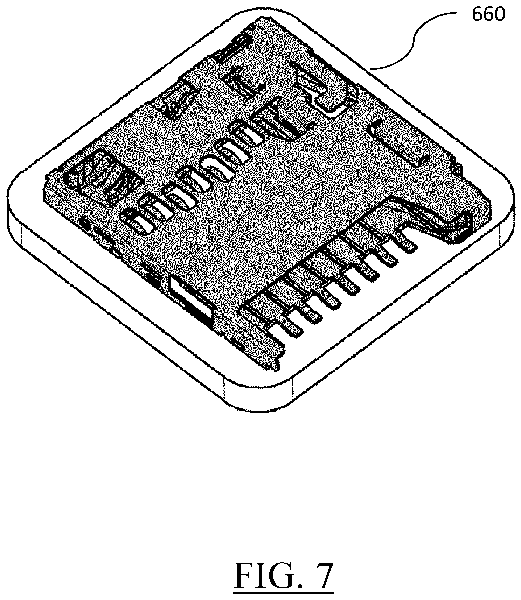

FIG. 7 shows an example of the fourth rigid zone 660 (e.g., automatically) defined. At least one (e.g., each) rigid zone may be defined (e.g., automatically or by an user through a graphical interface unit) by a respective base plane (e.g., a reference plane on which the rigid zone lies), a respective outline (e.g., to delineate a shape or a contour of the rigid zone, or any other internal structure thereof, if any), a respective thickness (e.g., based on a number of conductive layers and dielectric layers stacked up in the rigid zone), and one or more materials of composition of the rigid zone (e.g., fiberglass-reinforced epoxy (FR4) layers alternated to copper layers).

The obtaining S10 may comprise (e.g., by an user through a graphical interface unit) creating a 3D layout of the set of rigid zones based on a spatial configuration of previously placed rigid zones. The creating may comprise: (i) placing rigid zones of the rigid-flex circuit board in the folded state, (ii) defining geometric properties (e.g., outlines, values of the thickness) of the rigid zones, (iii) selecting appropriate materials for rigid zones (e.g., FR4), (iv) defining the number of layers to stack up for each rigid zone (e.g., defining a respective layer configuration), (v) placing thermal vias and hear sinks, and (vi) rounding corners. The result of such an obtaining S10 may be the 3D layout shown in FIG. 6. The method may then use such a 3D layout as a basis for the design and the subsequent manufacture of the rigid-flex circuit board. The steps for designing of the rigid-flex circuit board are substantially automatic (i.e., no intervention of the user is required). The subsequent manufacture of the rigid-flex circuit board may be automatic. In other words, the method may comprise (e.g., automatically) using the output (i.e., the output data representing the 2D layout computed at S30 and, for each flexible zone, the respective plane portion defined at S40), to manufacture a rigid-flex circuit board represented by the output data of the method.

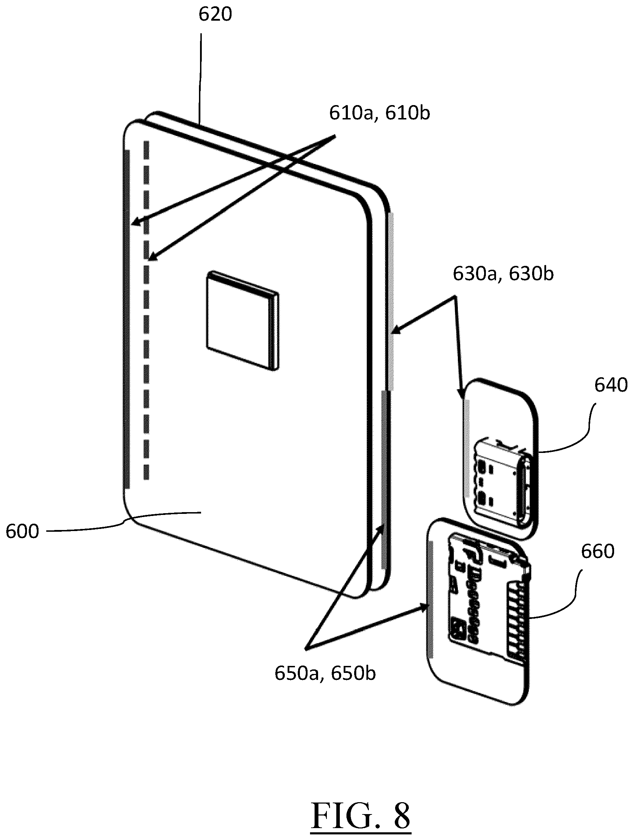

FIG. 8 shows the 3D layout representing the set of the four rigid zones of the rigid-flex circuit board in the folded state. The method comprises defining S20 (e.g., automatically by a dedicated algorithm for edge detection or by an user through a graphical interface unit), for each flexible zone, a respective set of edge segments of the respective subset of rigid zones connected by the flexible zone. The defining my also comprise selecting (by the user or automatically be the method) the one or more layers in the layer configuration to be connected with each other. In the figure, as an illustrative example, the rigid zone 600 is to be connected with the rigid zone 620 through a flexible zone extending from the left edge segment 610a (continuous line) of the rigid zone 600 and reaching the left edge segment 610b (dashed line) of the rigid zone 620. The rigid zone 620 is to be connected with the rigid zone 640 through a flexible zone extending from the top right edge segment 630a of the rigid zone 620 and reaching the left edge segment 630b of the rigid zone 640. The rigid zone 620 is also to be connected with the rigid zone 660 through a flexible zone extending from the bottom right edge segment 650a of the rigid zone 620 and reaching the left edge segment 650b of the rigid zone 660.

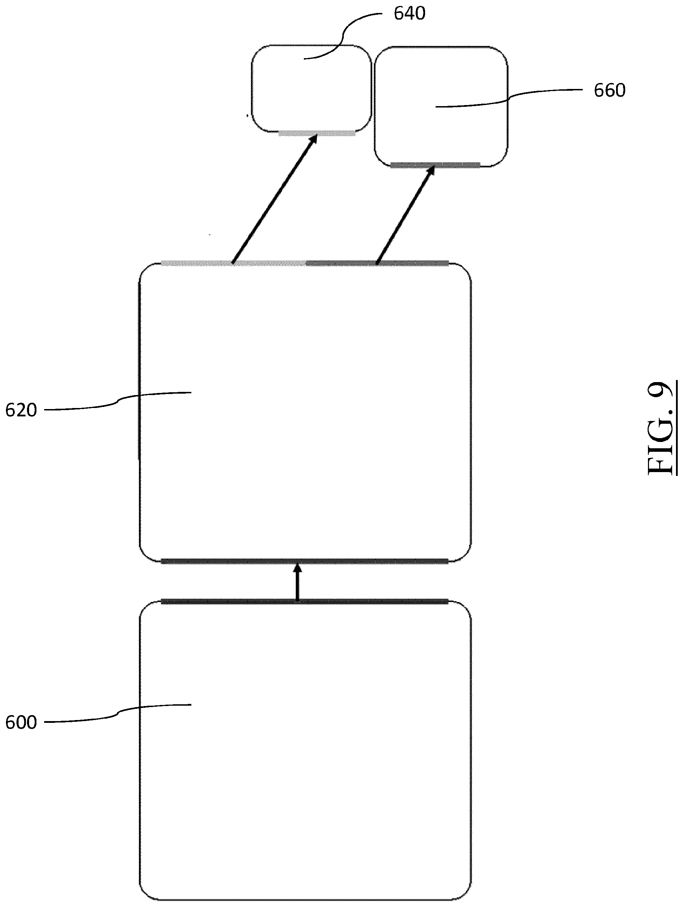

FIG. 9 shows a 2D layout (e.g., automatically) computed at S30. The 2D layout of the set of rigid zones is based on the 3D layout obtained at S10 and on the respective set of edge segments defined for each flexible zone at S20. The 2D layout represents the set of rigid zones of the rigid-flex circuit board in the flattened state. In the figure, for the sake of presentation, the rigid zone element 600 is placed next to rigid element 620 to which it is to be connected with. From the folded to the flattened state, the rigid zone element 600 is clock wisely rotated by 180° around the edge segment to be connected with the rigid zone element 620. The rigid zone 600 is selected as the reference rigid zone. The method computes the 2D layout on the base plane identified by said reference rigid zone. The rigid zone 620, being the rigid zone to be connected to the previously positioned rigid zone (e.g., in this case, the anchor rigid zone), is to be positioned on the reference plane. The rigid zone 640 and the rigid zone 660, being two rigid zones to be connected to the previously positioned rigid zone 620, are to be positioned on the reference plane.

Two examples of implementation of the iteratively positioning are now described.

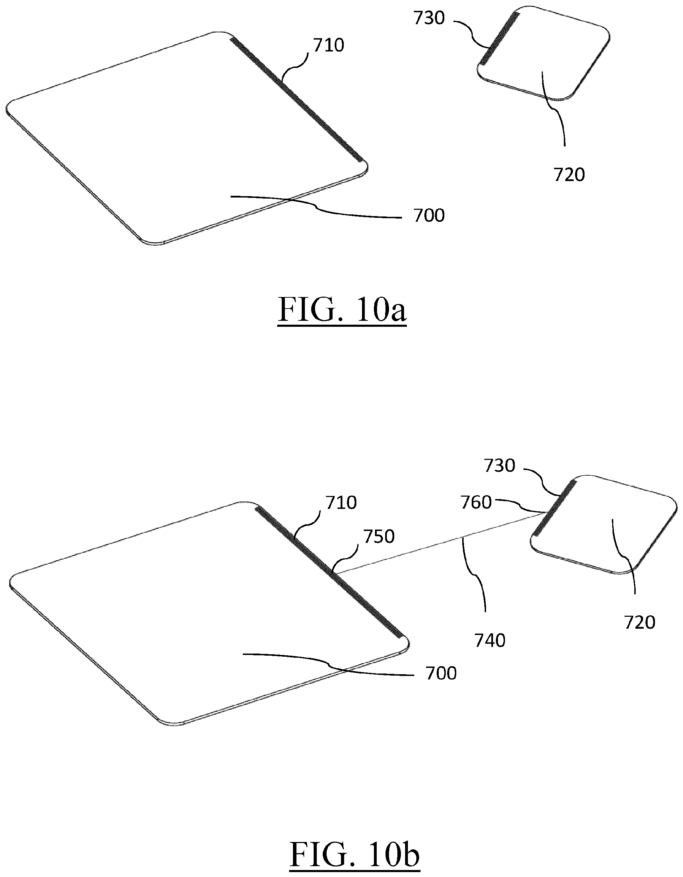

FIG. 10 to FIG. 12 illustrate a first example of implementation of the iteratively positioning.

FIG. 10a shows an input first rigid zone 700, which is selected to be the reference rigid zone, and an input second rigid zone 720. The first input rigid zone 700 is selected as the reference rigid zone. FIG. 10a illustrates the 3D layout representing the set of rigid zones of the rigid-flex circuit board in the folded state. FIG.10a illustrates the respective set of edge segments of the respective subset of rigid zone (e.g., to be) connected by the flexible zone. The respective set of edge segments comprises a first edge segment 710 of the first rigid zone 700 and a second edge segment 730 of the second edge zone 720.

FIG. 10b shows a computed line 740 connecting a first point 750 and a second point 760, the first point 750 belonging to the first edge segment 710 of the respective set of edge segments of the previously positioned first rigid zone 700, and the second point 760 belonging to the second edge segment 730 of the respective set of edge segments of the second rigid zone 720 in the 3D layout. The first point 750 and the second point 760 are middle points of the respective edge segments.

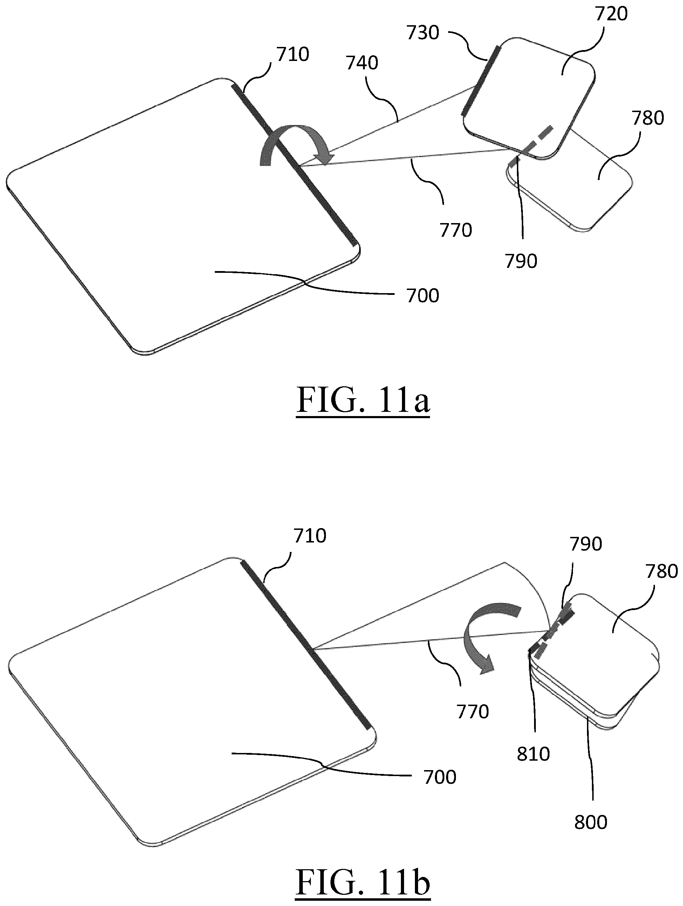

FIG. 11a shows a first rotation applied to the second rigid zone 720 around the first edge segment 710 of the previously positioned first rigid zone 700 so as to position the at least one computed connecting line 740 on the reference plane. The result of the first rotation is such that the rotated at least one computed connecting line 770 lies on the reference plane, i.e., the same plane of the first rigid zone 700. The first-rotated second rigid zone 780 and the respective first-rotated second edge segment 790 are (e.g., rigidly) rotated according to the first rotation.

FIG. 11b shows a second rotation applied to the first-rotated second rigid zone 780 around the at least one computed connecting line 770, previously positioned on the reference plane, so as to position the first-rotated second edge segment 790 of the first-rotated second rigid zone 780 on the reference plane. The result of the second rotation is such that the second-rotated second edge segment 810 of the second-rotated second rigid zone 800 lies on the reference plane.

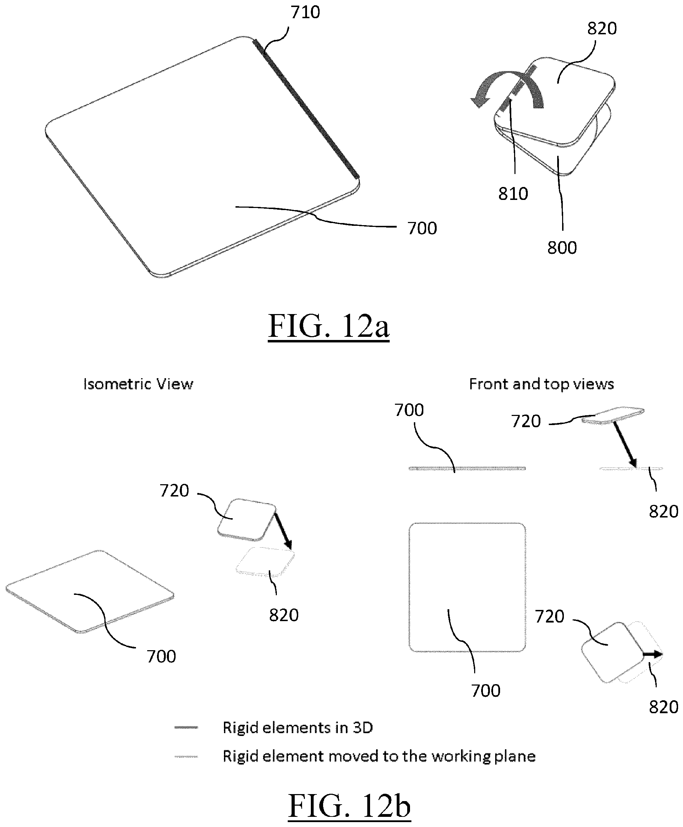

FIG. 12a shows a third rotation applied to the second-rotated second rigid zone 800 around the previously positioned second-rotated second edge segment 810 of the second-rotated second rigid zone 800 so as to position the second-rotated second rigid zone on the reference plane. The result of the third rotation is such that the third-rotated second rigid zone 820 lies on the reference plane.

FIG. 12b illustrates the final result of the first example of implementation of the iteratively positioning. In other words, the figure illustrates a comparison between the 3D layout representing the set of rigid zones of the rigid-flex circuit board in the folded state and the 2D layout representing the set of rigid zones of the rigid-flex circuit board in the flattened state. FIG. 12b shows, on the left part of the figure, an isometric view on the above-described iteratively positioning of the input second rigid zone 720 on the reference plane. The input second rigid zone 720, after the composition of rotations according to the first example of implementation of iteratively positioning, is positioned on the reference place as shown by the positioned second rigid zone 820. The reference plane on which the positioned second rigid zone 820 lies is the plane on which the input first rigid zone 700 lies. FIG. 12b shows, on the top left part of the figure, a front view on the above-described iteratively positioning of the input second rigid zone 720 on the reference plane. In the front view, the positioned second rigid zone 820 lies on the same plane of the input first rigid zone 700, which is the reference rigid zone (also referred to as anchor rigid zone). FIG. 12b shows, on the bottom left part of the figure, a top view on the above-described iteratively positioning of the input second rigid zone 720 on the reference plane. In the top view, the positioned second rigid zone 820 is translated to the left with respect to the (normal projection of the) input second rigid zone 720.

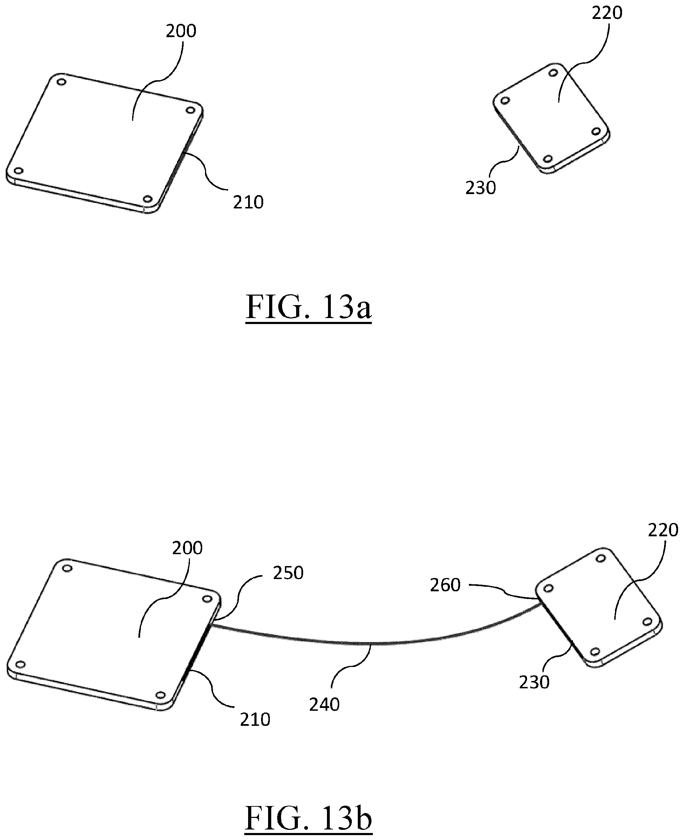

FIG. 13 to FIG. 15 illustrate a second example of implementation of the iteratively positioning.

FIG. 13a shows an input first rigid zone 200, which is selected to be the reference rigid zone, and an input second rigid zone 220. The first rigid zone 200 is selected as the reference rigid zone. FIG. 10a illustrates the 3D layout representing the set of rigid zones of the rigid-flex circuit board in the folded state. FIG.10a illustrates the respective set of edge segments of the respective subset of rigid zone (e.g., to be) connected by the flexible zone. The respective set of edge segments comprises a first edge segment 210 of the first rigid zone 200 and a second edge segment 230 of the second edge zone 220.

FIG. 13b shows a computed curve 240 (e.g., a spline of degree 5) connecting a first point 250 and a second point 260, the first point 250 belonging to the first edge segment 210 of the respective set of edge segments of the previously positioned first rigid zone 200, and the second point 260 belonging to the second edge segment 230 of the respective set of edge segments of the second rigid zone 220 in the 3D layout. The first point 250 and the second point 260 are closest points of the respective edge segments. The computed curve 240 is perpendicular to the first edge segment 210 of the first rigid zone 200 at the first point 250 and perpendicular to the second edge element 230 of the second rigid zone 220 at the second point 260.

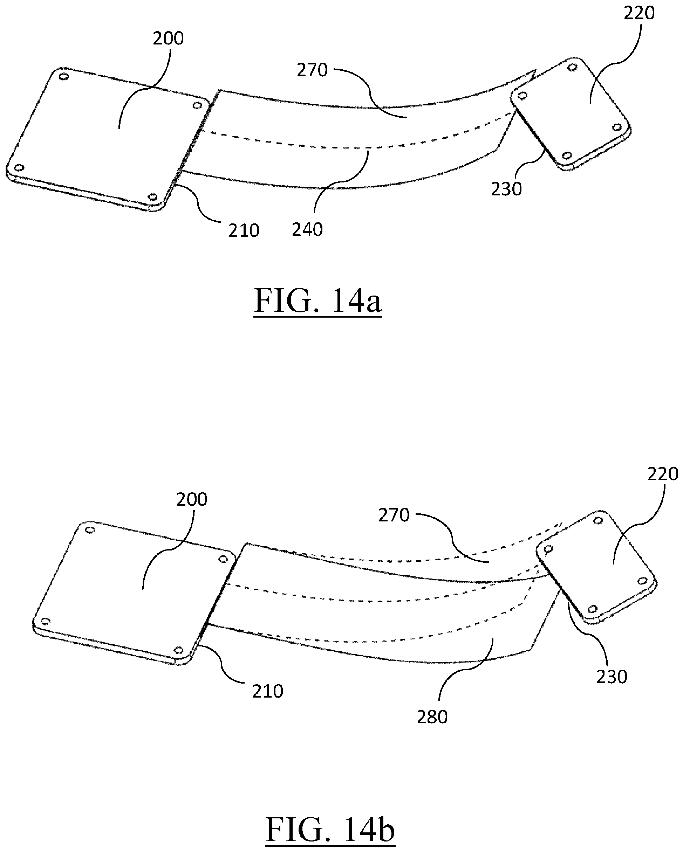

FIG. 14a shows an extruded surface 270 (e.g., a ruled surface) as a result of extruding (e.g., sweeping) the computed curve 240 along the direction of the first edge segment 210 of the respective set of edge segments of the previously positioned first rigid zone 200 on the reference plane.

FIG. 14b shows the extruded surface 270 being transferred (e.g., developed) to the reference plane. The transferred extruded surface 280 lies on the reference plane, meaning that transferred extruded surface 280 is a planar surface. The transferring may be performed by a transfer function that takes as input the extruded surface 270 and provides as output the transferred planar extruded surface 280.

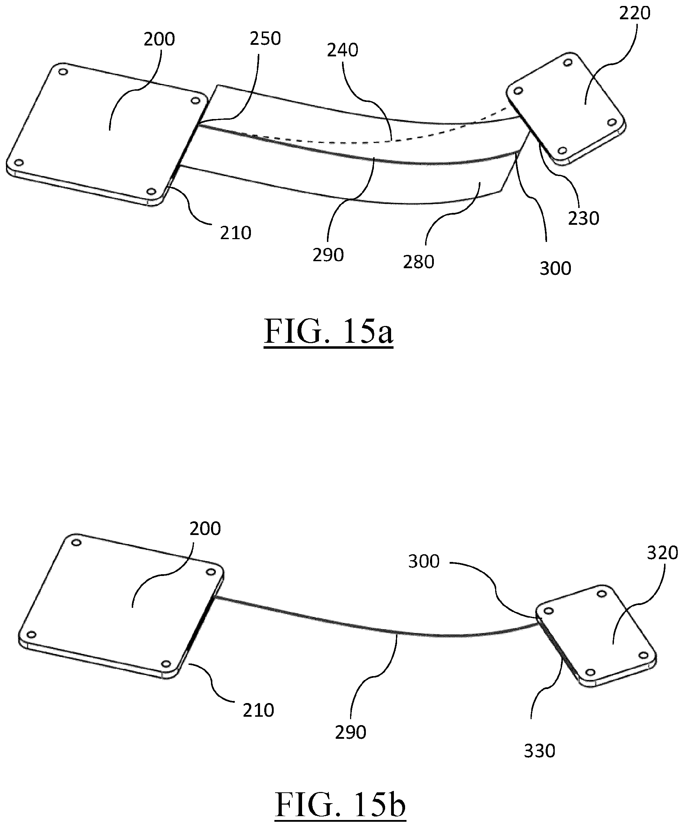

FIG. 15a shows the transferring of the computed curve 240 to the reference plane. The transferred computed curve 290 connects the first point 250 and a transferred second point 300 on the reference plane. The transferred extruded surface 280 comprises the transferred computed curve 290 lying on the reference plane.

FIG. 15b shows the positioning of the second rigid zone on the reference plane. The positioned second rigid zone 320 comprises preserving a perpendicular condition between the positioned second edge segment 330 of the positioned second rigid zone 320 and the transferred computed curve 290 at the transferred second point 300.

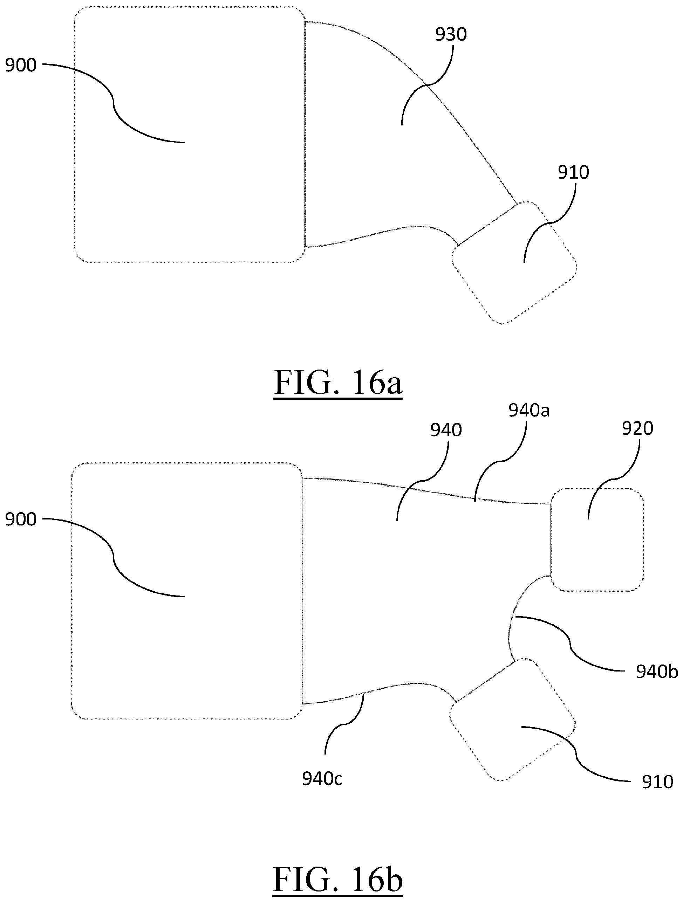

FIG. 16 illustrates examples of the defining S40, for each flexible zone, of a respective plane portion representing the flexible zone, based on the 2D layout.

FIG. 16a shows a 2D layout representing a first rigid zone 900 and a second rigid zone 910 of the rigid-flex circuit board in the flattened state. The respective plane portion 930 represents the flexible zone connecting the first rigid zone 900 and the second rigid zone 910. The respective plane portion 930 may comprise two or more spline curves defining the respective outline. The two or more spline curves may connect end points of the respective set of edge segments. The two or more spline curves may be perpendicular to the respective set of edge segments at the respective end points.

FIG. 16b shows a 2D layout representing a first rigid zone 900, a second rigid zone 910 and a third rigid zone 930 of the rigid-flex circuit board in the flattened state. The respective plane portion 940 represents the flexible zone connecting the first rigid zone 900, the second rigid zone 910 and the third rigid zone 920. The respective plane portion 940 connects three rigid zones by three curves (e.g., splines). A first curve 940a connects a first point (e.g., an edge point or a boundary point) on a first edge segment of a first rigid zone 900 (among the three rigid zones) with a first point (e.g., an edge point or a boundary point) on a third edge segment of the third rigid zone 920 (among the at least two rigid zones); a second curve 940b connects a second point (e.g., an edge point or a boundary point) on a third edge segment of the third rigid zone 920 (among the at least two rigid zones) with a first point (e.g., an edge point or a boundary point) on a second edge segment of the second rigid zone 910 (among the at least two rigid zones); a third curve 940c connects a second point (e.g., an edge point or a boundary point) on the second edge segment of the second rigid zone 910 (among the at least two rigid zones) with a second point (e.g., an edge point or a boundary point) on the first edge segment of the first rigid zone 900 (among the at least two rigid zones).

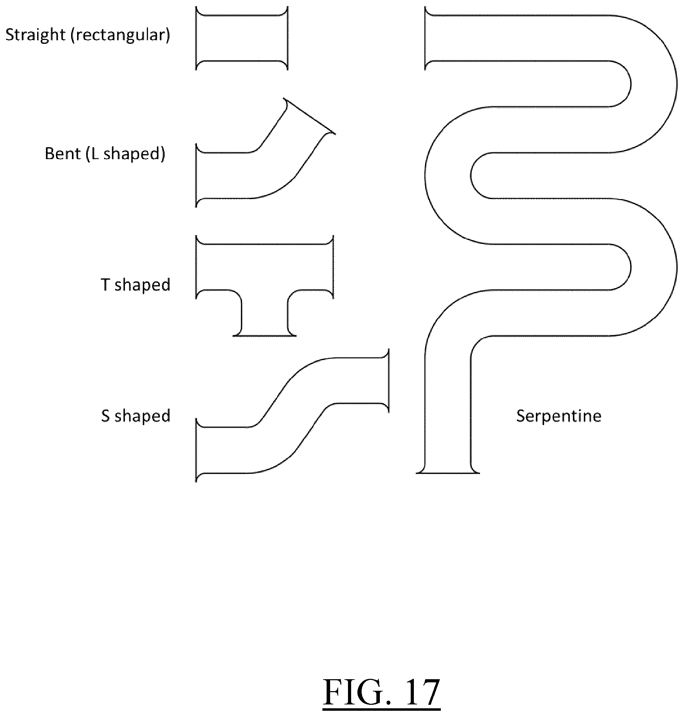

FIG. 17 shows examples of shapes of the plane portion. The method, during the defining S40, may comprise (e.g., automatically) selecting one or more shapes from the catalogue. The method, during the defining S40, may comprise (e.g., automatically) outputting the one or more selected shapes from the catalogue.

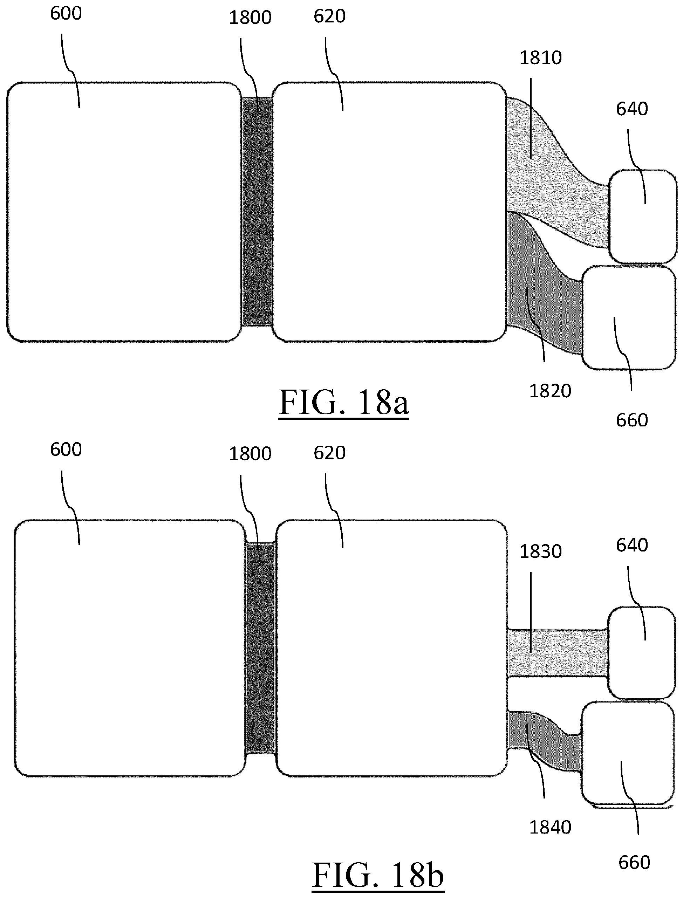

FIG. 18a illustrates examples of shapes of three plane portions, each representing a respective flexible zone, generated automatically by the method at 530. The figure shows a 2D layout representing the set of rigid zones in the flattened state together with the defined three plane portions. The 2D layout is based on the 3D layout shown in FIG. 8 described above, and on the respective set of edge segments defined for each flexible zone shown in FIG. 9 described above. The reference rigid zone 600 is connected with the rigid zone 620 by the plane portion 1800 representing a flexible zone in the flattened state. The rigid zone 620 is connected with the rigid zone 640 by the plane portion 1810 and with the rigid zone 660 by the plane portion 1820. The defining S40 may comprise modifying a width of the each respective plane portion. The plane portion 1810 shows a variable width from the edge segment of the rigid zone 620 to the edge segment of the rigid zone 640. Likewise, the plane portion 1820 shows a variable width from the edge segment of the rigid zone 620 to the edge segment of the rigid zone 660.

FIG. 18b illustrates other examples of shapes of three plane portions, each representing a respective flexible zone, after edited by an user. The plane portion 1830 shows a constant width from the edge segment of the rigid zone 620 to the edge segment of the rigid zone 640. Likewise, the plane portion 1840 shows a constant width from the edge segment of the rigid zone 620 to the edge segment of the rigid zone 660 and the plane portion 1840 is represented by a S shape plane portion.

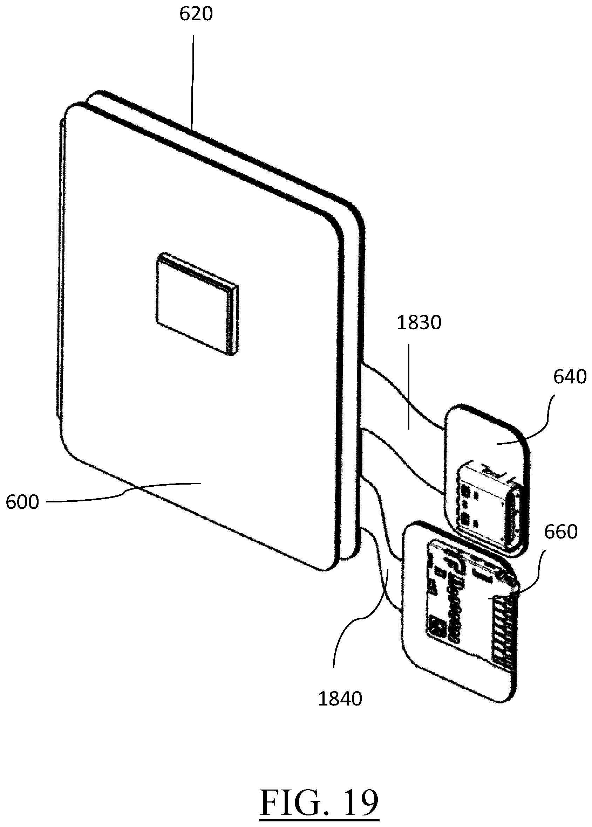

FIG. 19 shows a 3D representation of the rigid-flex circuit board in the folded state, after surface-deforming (e.g., by executing the "CGAL 4.6 - Triangulated Surface Mesh Deformation" algorithm) the respective plane portion representing each flexible zone.

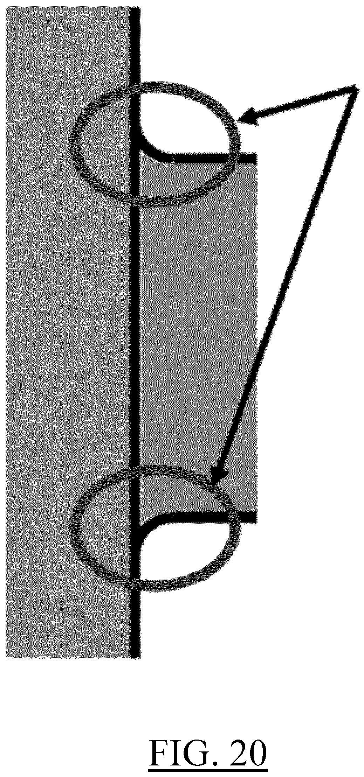

FIG. 20 illustrates the result of adding rounded corners at the respective plane portion representing the flexible zone in the flattened state.

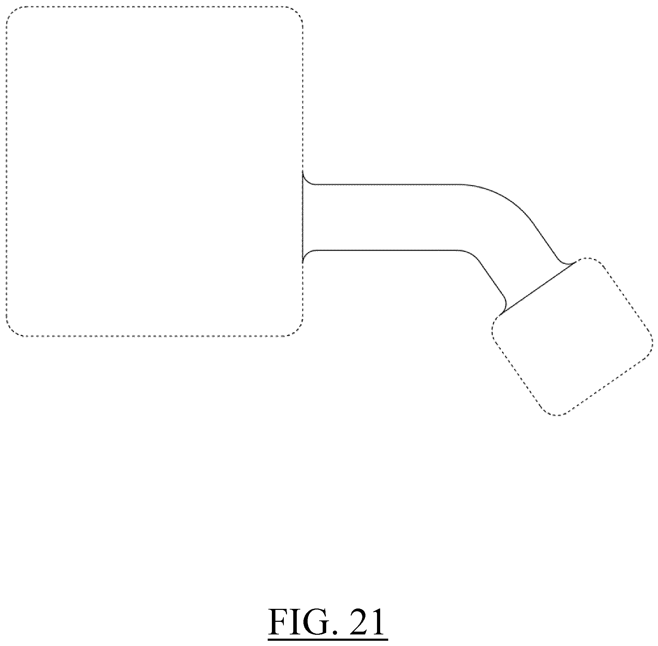

FIG. 21 shows an example where the plane portion representing the flexible zone is an L parametric shape with rounded corners at the interface connecting the respective edge segment of each rigid zone and the plane portion.

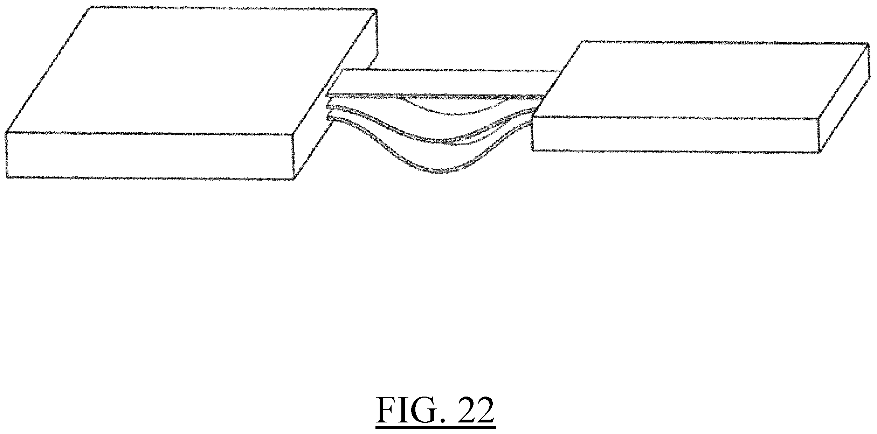

FIG. 22 shows an example of a 3D representation of a rigid-flex circuit board where some rigid zone and some of the flexible zones overlap in the 2D layout. The method of the present disclosure can support this type of examples (sometimes known as "book binders"), where overlapping flexible zones connect the same rigid zones but have different shapes. In this case, the defining S20, the computing S30, and the defining S40 may be applied for each overlapping flexible zone. The method may further comprise combining the overlapping respective plane portions representing each overlapping flexible zone in a same 2D layout of the set of rigid zone.

## Claims

1. A computer-implemented method for designing a rigid-flex circuit board comprising a set of rigid zones and one or more flexible zones, each flexible zone connecting a respective subset of rigid zones, the rigid-flex circuit board having a folded state and a flattened state, the method comprising:
- obtaining (S10) a 3D layout of the set of rigid zones, the 3D layout representing the set of rigid zones of the rigid-flex circuit board in the folded state;
- defining (S20), for each flexible zone, a respective set of edge segments of the respective subset of rigid zones connected by the flexible zone;
- computing (S30) a 2D layout of the set of rigid zones, based on the 3D layout and on the respective set of edge segments defined for each flexible zone, the 2D layout representing the set of rigid zones of the rigid-flex circuit board in the flattened state; and
- defining (S40), for each flexible zone, a respective plane portion representing the flexible zone in the flattened state, based on the 2D layout.

2. The method of claim 1, wherein the method further comprises:
- surface-deforming the respective plane portion representing each flexible zone so as to obtain a 3D representation of the rigid-flex circuit board in the folded state.

3. The method of claim 2, wherein each flexible zone has in the folded state a curvature radius everywhere at least three times a thickness of the flexible zone.

4. The method of any one of claims 2 or 3, wherein the method further comprises:
- displaying the 3D representation.

5. The method of any one of claims 1 to 4, wherein the computing of the 2D layout comprises:
- selecting a reference rigid zone, the reference rigid zone being positioned on a reference plane, the 2D layout of the set of rigid zones being computed in the reference plane;
- iteratively positioning each second rigid zone on the reference plane, based on a relative position, in the 3D layout, between the second rigid zone and a first rigid zone previously positioned on the reference plane and to which the second rigid zone is connected by at least one flexible zone.

6. The method of claim 5, wherein the iteratively positioning is further based on a relative orientation, in the 3D layout, between a first edge segment of the respective set of edge segments defined on the first rigid zone and a second edge segment of the respective set of edge segments defined on the second rigid zone.

7. The method of any one of claims 5 or 6, wherein the iteratively positioning further comprises:
- translating the positioned second rigid zone on the reference plane along a direction so as to increase a distance between the positioned second rigid zone and the previously positioned first rigid zone on the reference plane, the distance measuring a length between a first point on a first edge segment of the respective set of edge segments of the previously positioned first rigid zone and a second point on a second edge segment of the respective set of edge segments of the positioned second rigid zone.

8. The method of any one of claims 5 to 7, wherein the iteratively positioning further comprises:
- computing at least one curve connecting a first point and a second point, the first point belonging to a first edge segment of the respective set of edge segments of the previously positioned first rigid zone on the reference plane, and the second point belonging to a second edge segment of the respective set of edge segments of the second rigid zone in the 3D layout, the first point and the second point being the closest points between the first edge segment of the first rigid zone and the second edge segment of the second rigid zone, the at least one computed curve being perpendicular to the first edge segment of the first rigid zone at the first point and perpendicular to the second edge element of the second rigid zone at the second point;
- transferring the at least one computed curve to the reference plane, the transferred at least one computed curve connecting the first point and a transferred second point on the reference plane; and
- positioning the second rigid zone on the reference plane, the positioning of the second rigid zone comprises preserving a perpendicular condition between the positioned second edge segment of the positioned second rigid zone and the transferred at least one computed curve at the transferred second point.

9. The method of any one of claims 5 to 7, wherein the iteratively positioning further comprises:
- computing at least one line connecting a first point and a second point, the first point belonging to a first edge segment of the respective set of edge segments of the previously positioned first rigid zone, and the second point belonging to a second edge segment of the respective set of edge segments of the second rigid zone in the 3D layout, the first point and the second point being middle points of the respective edge segments; and
- positioning the second rigid zone on the reference plane, the positioning of the second rigid zone comprises performing a composition of rotations of the second rigid zone in the following order:
-- a first rotation around the first edge segment of the previously positioned first rigid zone so as to position the at least one computed connecting line on the reference plane;
-- a second rotation around the at least one computed connecting line, previously positioned on the reference plane, so as to position the second edge segment of the second rigid zone on the reference plane; and
-- a third rotation around the previously positioned second edge segment of the second rigid zone so as to position the second rigid zone on the reference plane; and
optionally, translating the positioned second rigid zone on the reference plane along the at least one computed connecting line so as to increase a distance between the positioned second rigid zone and the previously positioned first rigid zone on the reference plane, the increase of the distance being a percentage of a length of the at least one connecting line previously positioned on the reference plane.

10. The method of any one of claims 1 to 9, wherein the defining, for each flexible zone, of the respective plane portion representing the flexible zone in the flattened state comprises adding a rounded corner at the respective plane portion representing the flexible zone in the flattened state.

11. The method of any one of claims 1 to 10, wherein the defining, for each flexible zone, of the respective plane portion representing the flexible zone in the flattened state comprises modifying a width of the respective plane portion.

12. The method of any one of claims 1 to 11, wherein the defining, for each flexible zone, of the respective plane portion representing the flexible zone in the flattened state comprises selecting a shape of the respective plane portion among at least one of the following:
- a rectangular shape, and/or
- a L shape, and/or
- a S shape, and/or
- a T shape, and/or,
- a serpentine shape, and/or
optionally, a parametric shape being defined by a length parameter, a width parameter, and curvature parameters each representing a respective curvature of a bent-shaped flexible zone.

13. A computer program comprising instructions which, when the program is executed by a computer, cause the computer to perform the method of any one of claims 1 to 12.

14. A computer readable storage medium having recorded thereon a computer program of claim 13.

15. A system comprising a processor coupled to a memory, the memory having recorded thereon the computer program of claim 13.
